# EUROPEAN PATENT APPLICATION

(11) **EP 2 192 027 A1**
(43) Date of publication of application: **02.06.2010**
(21) Application number: 09380182.7
(22) Date of filing: 01.12.2009
(51) Int. Cl.: B62D 25/07

(54) **Body for automobiles**

(30) Priority: 01.12.2008 ES 200802469 U
(71) Applicant: Seat, S.A., 08760 Martorell - Barcelona (ES)
(72) Inventor: Garcia Haro, Francisco, 08760 - Martorell - Barcelona (ES); Lacarta Leon, Santiago, 08760 - Martorell - Barcelona (ES); Garcia Fernandez, Concepcion, 08760 - Martorell - Barcelona (ES)
(74) Representative: Carvajal y Urquijo, Isabel

(57) **Abstract**

Body for automobiles, defining a rear hole (3) in which an access door is mounted, being said hole surrounded on the upper and lateral sides by a water channel (5), the upper section of which partially overlapping a flap (7) which is an extension of the roof. The water channel features, next to the transversal edges (10) of the aforementioned flap, grooves which are parallel to said edges. The flap extends, from its transversal edges, in flanges (11) running on the grooves (9), which are narrower than said grooves and inclined towards the interior thereof, without reaching their bottom, delimiting between said bottoms and flanges a notch (12). The grooves are filled with body filter (13) which penetrates in the aforementioned notch, covering the flange and keeping it apart from the bottom of the grooves.

## Description

### Field of the invention

The present invention refers to a body for automobiles, and more concretely to a body for automobiles defining a rear hole in which an access door is mounted, being said hole surrounded on the upper and lateral sides by a water channel, on which the roof is later placed.

### Background of the invention

In the bodies of the type described above, the union between the end of the roof and the water channel is achieved through a lap joint of both components.

To that end, the roof ends in its upper part in a flap which rests on the water channel surface. The tightness between the flap and the water channel is achieved through a body filler which, at the same time, avoids corrosion.

This system, however, has sealing problems between the ends or transversal edges of the roof flap and the bottom of the channel. In these edges, there are corrosion problems as well, all of which is due to the fact that it is difficult for the body filler at the end of the roof sheet, inside the water channel, to adequately protect the transversal edges of the flap.

### Description of the invention

The object of the present invention is to eliminate the aforementioned problem, providing the water channel and the roof flap with means to enable to carry out an appropriate filling with body filler, which will ensure perfect tightness between the flap and the water channel, and which will also isolate the flap, at least in its transversal edges, from the bottom of the channel, protecting it against corrosion effects.

According to the present invention, the rear flap in which the roof ends, from its transversal edges, finishes out in flanges under which there are other grooves in the water channels. The flanges are inclined towards the bottom of the grooves, without reaching said bottom, so that between the groove bottom and the flange edge a notch is delimited.

The aforementioned grooves are filled with body filler which penetrates under the flange, through the notch delimited between it and the bottom of the groove, which makes the transversal flanges of the flap to be covered in the body filler.

With the constitution described it is achieved a perfect sealing between the transversal edges of the flap at the rear part of the roof and the bottom of the water channel, since filling the grooves with body filler closes the notch defined by the bottom of said groove and the edge of the flanges, and at the same time said edge is perfectly protected against corrosion effects.

### Brief description of the drawings

The attached drawings show a non-limiting example of an embodiment, the description of which will enable to understand better the characteristics and advantages of the invention.

In the drawings:
Figure 1 shows a perspective view of the rear part of the left side of an automobile and the adjacent area of the rear part of the body, including part of the hole to be occupied by the rear door and left driver.
Figure 2 is a plan view of the rear part of the roof and the adjacent area of the left side of the body.
Figure 3 is a perspective view of the left rear part of the roof of figure 2.
Figure 4 is a sectional view of the water channel, taken according to the cutting line IV-IV of figure 1.
Figure 5 is a similar view to that of figure 4, with the groove of the water channel filled with body filler.

### Detailed description of an embodiment

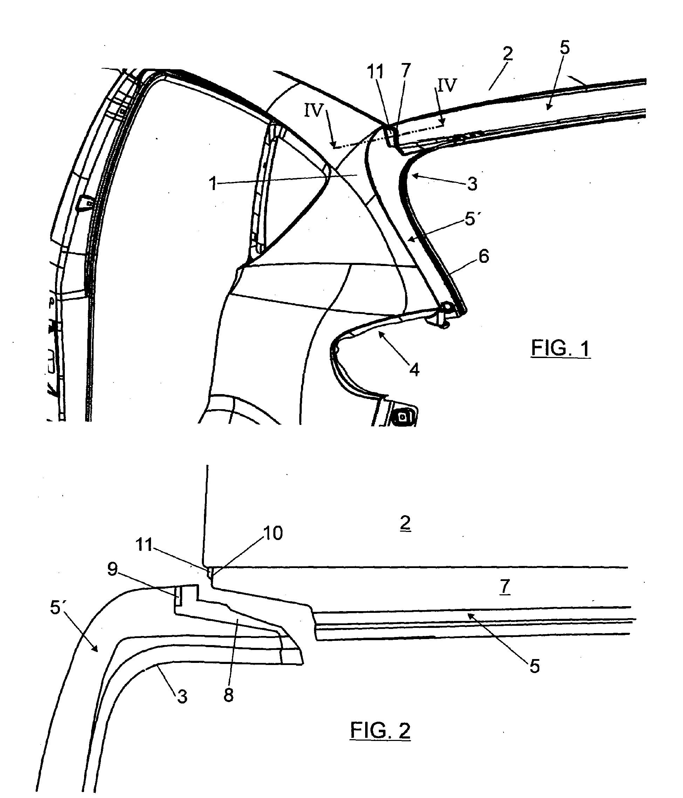

Figure 1 shows a perspective view of the rear left part of an automobile, including part of the left side of the vehicle, which is indicated by reference number 1, and part of the roof is indicated by reference number 2. These components delimit a hole or open edge 3 in which the rear door of the boot will be mounted. Also, as a continuation of the hole 3, the left side 1 of the body defines a hole 4 for the corresponding optic group.

Around the hole 3 intended for the rear door, the body forms a water channel 5 surrounding the upper and side part of the hole 3. This water channel, in a traditional way, includes a sealing joint 6, all of which is in a manner already known.

In order to achieve a good sealing in the water channel 5 along the upper section, the roof 2 extends to the rear area in a flap 7 forming the water channel 5 in the corresponding area, while in the lateral sections, indicated by number 5', the water channel is formed from the sheet of the sides 1 of the body.

Figure 2 shows the union between sections 5 and 5' of the water channel, through a partial overlapping area 8 between both components.

The union between sections 5 and 5' through an overlapping of area 8, however, has tightness and corrosion problems in the transversal edges of the flap 7, since filling with body filler the water channel in its sections 5 and 5' fails to achieve appropriate sealing and protection between the transversal edges of the flap 7 and the adjacent surface of the water channel 5'.

According to the present invention, in the water channel, in section 5', a groove 9 is realized, which is located next to the transversal edges 10 of the flap 7, being the groove 9 parallel to the edge 10.

On the other hand, the flap 7 extends, from its transversal edges 10 in flanges 11 which when joining the roof 2 with the sides 1 of the body will run along the grooves 9.

As it can be understood, the same groove and flange are placed on the right side of the body.

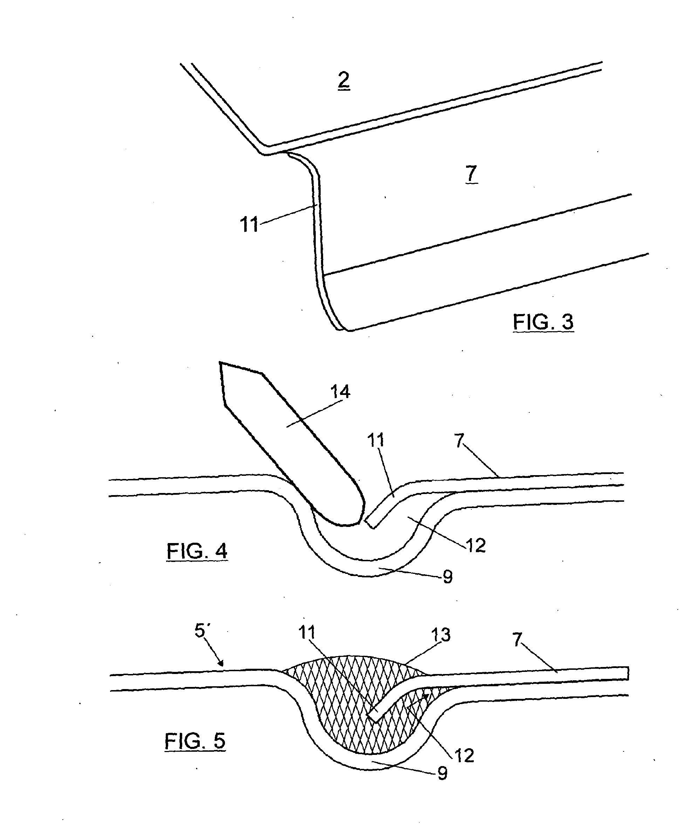

As it can be seen in figure 4, the flange 11 of each side runs on the adjacent groove 9, being the flange narrower than the groove and inclined towards the interior thereof, without reaching the bottom, as it is dearly shown in figure 4.

Between the flange 11 and the bottom of the groove 9 a notch 12 is delimited running along the whole groove.

As shown in figure 5, the groove 9 is filled with body filler 13, which penetrates and closes the notch 12 so that the end of the flange 11 is sealed in the body filler 13.

The groove 9 and the flange 11 will serve as guide of the body filler nozzle 14, as shown in figure 4, so as to ensure the filling of the notch 12 with body filler, and thus the tightness between the transversal edges of the flap 7 and the water channel, as well as perfect protection against corrosion for the flange 11. Likewise, the filling with body filler is facilitated; since the channel 12 and the flange 11 serve as a guide for the nozzle 14.

## Claims

1. Body for automobiles, defining a rear hole in which an access door is mounted, being said hole surrounded on the upper and lateral sides by a water channel, on the upper section of which partially overlaps a flap which is an extension of the roof, **characterized in that** the water channel features, next to the transversal edges of the aforementioned flap, grooves which are parallel to said edges; and **in that** the aforementioned flap extends, from its transversal edges, in flanges running on the grooves, which are narrower than said grooves and inclined towards the interior thereof, without reaching the bottom, delimiting between said bottoms and flanges a notch and **in that** they are filled with body filler which penetrates in the aforementioned notch, covering the flange and keeping it apart from the bottom of the grooves.
